# EUROPEAN PATENT APPLICATION

(11) **EP 4 521 502 A1**
(43) Date of publication of application: **12.03.2025**
(21) Application number: 24197237.1
(22) Date of filing: 29.08.2024
(51) Int. Cl.: H01M 10/04, H01M 50/209, H01M 50/224, H01M 50/227, H01M 50/231, H01M 50/238, H01M 50/242, H01M 50/244

(54) **BATTERY MODULE**

(30) Priority: 05.09.2023 KR 20230117641
(71) Applicant: SAMSUNG SDI CO., LTD., Giheung-gu Yongin-si, Gyeonggi-do 17084 (KR)
(72) Inventor: HONG, Seungjoon, 17084 Yongin-si (KR)
(74) Representative: Marks & Clerk LLP

(57) **Abstract**

A battery module (10) includes battery cells (C), a side plate (100) on a side of the battery cells, and an end plate (200) connected to the side plate. The end plate includes a body (210). The battery module also includes an end cover (220) on one side of the body facing the battery cells. At least a portion of the end cover includes a flexible material, and the end cover is configured to distribute pressure applied to the end plate.

## Description

### BACKGROUND

### 1. Field

One or more embodiments relate to a battery module.

### 2. Description of the Related Art

Secondary batteries are batteries designed to be capable of charging and discharging, and may be used as an energy source for mobile devices, electric vehicles, hybrid vehicles, electric bicycles, and uninterruptible power supplies. The secondary batteries may be used in the form of a single battery cell, depending on the type of external device to which they are applied, or in the form of a module or pack in which multiple battery cells are connected and bundled into one unit.

As applications where the secondary batteries are utilized increasingly require larger capacities, battery cells are gradually becoming larger to increase energy density. As the number and size of battery cells included in a battery module increases, the overall size and weight of the battery module are also increasing. In the process of manufacturing a battery module, multiple battery cells are compressed in the longitudinal direction. In this case, because the thickness of the battery cell is larger than the actual design value, there is a problem that excessive pressure is concentrated in the center when the battery cell is compressed against the end plate. Additionally, as the end plate is made of a material with high hardness, the battery cell swells and shearing force is applied to the connection between the end plate and side plate, which may cause problems with the durability of the battery module. This problem is a factor that worsens the reliability of battery modules as the number of battery cells increases and their size increases.

The above-mentioned related technology is technical information that the inventor possessed for deriving the present invention or obtained in the process of deriving the present invention, and may not necessarily be said to be known technologies disclosed to the general public before the application for the present invention.

### SUMMARY

One or more embodiments relate to a battery module having durability and reliability of the battery module by distributing the pressure applied to an end plate due to deformation or expansion of the battery cell.

However, the above-described battery module is illustrative, and the problems that the present disclosure seeks to solve are not limited thereto.

Additional aspects will be set forth in part in the description which follows and, in part, will be apparent from the description, or may be learned by practice of the presented embodiments of the present disclosure.

According to one or more embodiments, a battery module may include battery cells; a side plate on a side of the battery cells; and an end plate connected to the side plate. The end plate may include a body. The battery module may also include an end cover on one side of the body facing the battery cells. At least a portion of the end cover includes a flexible material, and the end cover is configured to distribute pressure applied to the end plate.

The end cover may be configured to be deformed into a shape corresponding to a battery cell closest to the end plate.

A center of the end cover may be configured to deform to become concave in response to one or more of the battery cells deforming or expanding.

A thickness of the end cover may gradually decrease from an end toward a center of the end cover in one direction.

One side of the body facing the end cover may include a connection groove, and one side of the end cover facing the body may include a connection protrusion in the connection groove.

A cross-sectional area of the connection groove may gradually increase from one side to the other side of the body.

The connection groove may include an inclined surface inclined outward from one surface of the body toward another surface of the body.

The inclined surface may include two inclined surfaces spaced apart in a width direction of the body. The connection groove may include an opening in the surface of the body and a bottom surface opposite the opening and connecting the two inclined surfaces to each other.

The connection groove may further include a corner portion that is located between the two inclined surfaces and the bottom surface and at least a portion of the corner portion may be curved.

The body may include two or more pores, and the connection groove may be spaced apart from the pores in a width direction of the body.

A central axis of the connection groove may not overlap the pores.

The connection groove may extend in a height direction of the battery module and may include two or more connection grooves spaced apart in one direction, and the connecting protrusion may include two or more connecting protrusions corresponding to the connecting grooves.

An inner surface of the end cover facing the battery cells may include a flexible material, and the body may include a material more rigid than the end cover.

The body and the end cover may be formed by insert molding.

The end cover may include a first guide at an edge of the end cover and protruding toward the battery cells; and a second guide extending from a lower portion of the first guide. The connecting protrusion, the first guide, and the second guide may be integral and may include the same material.

The first guide may include a pair of first guides on both sides of the end cover in one direction, and the second guide may include a pair of second guides extending from a lower end of the pair of first guides along a lower edge of the end cover.

The end cover may further include a slit between the pair of second guides.

A portion of one surface of the end cover facing the battery cells may be curved.

The end cover may have a concave center.

At least some of the above and other features of the invention are set out in the claims.

Other aspects, features and advantages other than those described above are apparent from the detailed description, claims and drawings for carrying out the invention below.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 shows a perspective view of a battery module;
FIG. 2 shows an exploded perspective view of a battery module;
FIG. 3 shows an exploded perspective view of an end plate;
FIG. 4 shows a cross section of an end plate;
FIG. 5 shows a perspective view of an end plate;
FIG. 6 shows an enlarged portion of an end plate;
FIG. 7 shows a pressure distribution on an end plate of a conventional battery module;
FIG. 8 shows the state before battery cells expand in a battery module;
FIG. 9 shows a pressure distribution on an end plate of a battery module; and
FIG. 10 shows a cross section of a battery module.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Some embodiments of the present disclosure and methods according thereto may be understood by referring to the detailed descriptions and drawings of the embodiments. The described embodiments may have various modifications and be implemented in different forms, and are not limited to the embodiments described herein. Additionally, some or all of the features of various embodiments of the present disclosure may be combined with each other. Each embodiment may be implemented independently or in relation to each other. The described embodiments are provided as examples to ensure that the present disclosure is complete, and are also intended to completely convey the idea of the present disclosure to those skilled in the art to which the present disclosure pertains. This disclosure is subject to all modifications, equivalents, and substitutions within the technical scope of the present invention. Accordingly, processes, elements, and techniques that are not necessary to those skilled in the art for a complete understanding of the embodiments of the present disclosure may not be described.

Unless otherwise noted throughout the accompanying drawings and specification, the same reference signs, letters, or combinations thereof indicate the same components, so the descriptions already given are omitted. Additionally, in order to clearly explain the present invention, portions unrelated to the description have been omitted.

The relative sizes of elements, layers, and regions in the drawings may be exaggerated for clarity. The use of hatching and/or shading in the accompanying drawings generally serves to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to embodiments and/or cross-sectional examples that are schematic illustrations of intermediate structures. The appearance of the drawing may therefore vary, for example as a result of manufacturing technology and/or tolerances. In addition, the specific structural or functional description disclosed in this specification is merely an example for explaining embodiments according to the concept of the present invention. Accordingly, the embodiments disclosed in this specification should not be construed as being limited to the shape of the illustrated area and include, for example, variations in shape due to manufacturing.

The areas shown in the drawings are schematic in nature and their shapes are not intended to be illustrative of the actual shape of the device areas and are not intended to be limiting the actual shape of the device areas. In addition, as those skilled in the art will recognize, the described embodiments may be modified in various ways without departing from the idea or scope of the present disclosure.

Numerous specific details are set forth in the specification to provide a thorough understanding of the various embodiments. However, various embodiments may be practiced without or including one or more of these specific details. In other instances, well-known structures and devices are shown in block diagram form to avoid unnecessarily obscuring the various embodiments.

To describe the relationship of one element or feature to another element or feature as illustrated in the drawings, spatially relative terms, such as "below", "above", "lower portion", "upper portion", may be used herein to facilitate description. Spatially relative terms are intended to include various orientations of the device in use or operation in addition to those shown in the drawings. For example, when the device in the drawings is turned over, other elements or features described as "below" or "bottom" will be facing "above" the other elements or features. Accordingly, as illustrative terms, "down" and "lower" may include both up and down directions. The device may be oriented in different directions (e.g., rotated 90 degrees or in other directions) and the spatially relative descriptions used herein should be interpreted accordingly. Similarly, when the first portion is described as being disposed "above" the second portion, this may mean that the first portion is disposed above or below the second portion.

In addition, the expression "viewed from the top" means that portion of an object is viewed from above, and the expression "in a schematic cross-section view" means when a schematic cross-section is taken by cutting a portion of an object vertically. The term "viewed from the side" means that the first object may be above, below or to the side of the second object and vice versa. Additionally, the terms "overlap" may include layer, lamination, surface, extension, covering, or partially covering, or any other suitable term that would be understood by one of ordinary skill in the art. The expression "does not overlap" may include meanings, such as "apart from" or "separated from" and any other suitable equivalents recognized and understood by those skilled in the art. The term "surface" may mean that a first object may directly or indirectly face a second object. When there is a third object between a first object and a second object, the first object and the second object face each other, but may be understood as indirectly opposing each other.

When an element, layer, region, or component is referred to as being "formed", "connected" or "coupled" to another element, it may be formed directly on a layer, region, or component, may be formed on another component, layer, region, or component, or may be indirectly formed on, connected to, or coupled to another component. In addition, it may collectively refer to direct or indirect combinations or connections of elements, layers, regions, or components and integral or non-integral combinations or connections of elements, layers, regions, or components so that one or more elements, layers, regions, or components may exist. For example, when an element, layer, region, or component is referred to as being "electrically connected" or "electrically coupled" to another element, layer, region, or component, it may be electrically connected or coupled directly to the other element, layer, region, or component, or other elements, layers, regions, or components may be present. However, "direct connection" or "direct coupling" means that one component is directly connected or combined with another component without an intermediate component, or is on another component. In addition, in this specification, when a portion of a layer, film, region, guide plate, etc. is formed in another portion, the formation direction is not limited to the upper direction, and includes that the portion is formed on the side or lower portion. Conversely, when a portion of a layer, film, region, guide plate, etc. is formed "under" another portion, this includes cases where there is another portion between the portion and the other portion as well as cases where the portion is "immediately below" another portion. In addition, other expressions that describe relationships between components, such as "between," "immediately between," "adjacent to," and "immediately adjacent to," may be interpreted similarly. In addition, when an element or layer is referred to as being "between" two elements or layers, it may be the only element between the two elements or layers, or there may be other elements in therebetween.

For the purposes of this specification, expressions such as "at least one or more" or "any one" do not limit the order of individual elements. For example, "at least one of X, Y and Z", "at least one of X, Y or Z", "at least one selected from the group consisting of X, Y and Z" may include X alone, Y alone, Z alone, or any combination of two or more of X, Y, and Z. Similarly, expressions such as "at least one of A and B" and "at least one of A or B" may include A, B or A and B. As used herein, the term "and/or" generally includes any combination of one or more related list items. For example, expressions such as "A and/or B" may include A, B, or A and B.

Terms, such as "first," "second," "third," and the like may be used herein to describe various elements, components, regions, layers, and/or cross-sections, but these elements, components, regions, layers, and/or cross-sections are not limited by these terms. These terms are used to distinguish one element, component, region, layer, or cross-section from another element, component, region, layer, or cross-section. Accordingly, a first element, component, region, layer or cross section described below may be referred to as a second element, component, region, layer or cross section without departing from the scope of the present invention. Describing an element as a "first" element may not require or imply the presence of a second or other element. Terms such as "first," "second," etc. may be used herein to distinguish different categories or sets of elements. For clarity, terms such as "first," "second," etc. may refer to "first category (or first set)," "second category (or second set)," etc., respectively.

The terms used in this application are only used to describe specific embodiments and are not intended to limit the invention. As used herein, singular terms are intended to include plural terms and plural terms are also intended to include the singular, unless the context clearly dictates otherwise. The terms "include," "comprise," and "have" when used herein are meant to designate the presence of specified features, integers, or steps. These expressions do not exclude the presence or addition of one or more other functions, steps, operations, components and/or groups thereof.

When one or more embodiments may be implemented differently, certain process sequences may be performed differently than the described order. For example, two processes described in succession may be performed substantially simultaneously or may be performed in an order opposite to that described.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms used herein, including technical or scientific terms, have the same meaning as commonly understood by a person of ordinary skill in the technical field to which the present invention pertains. Terms such as those defined in commonly used dictionaries should be construed as having a meaning consistent with their meaning in the context of the relevant technology and/or this specification, and unless explicitly defined herein, it is not to be interpreted in an idealized or overly formal sense.

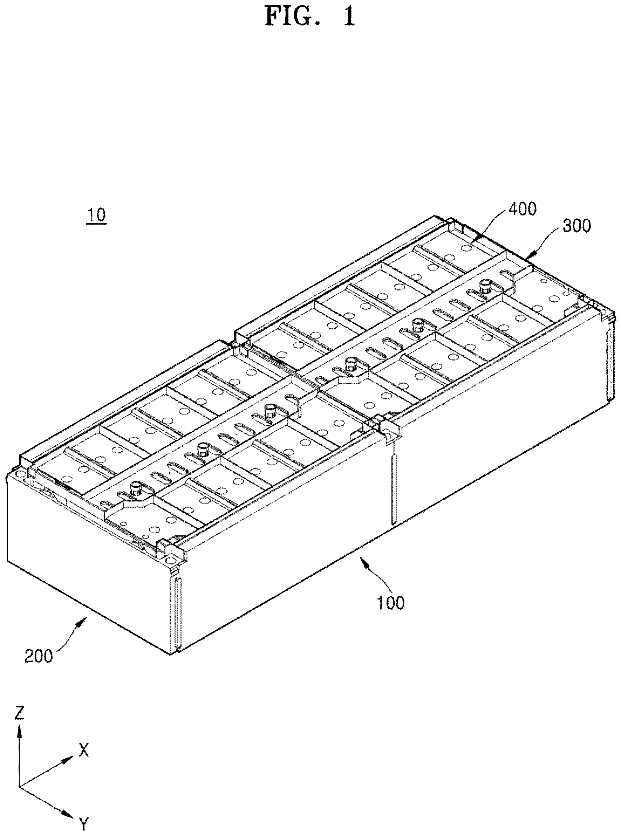

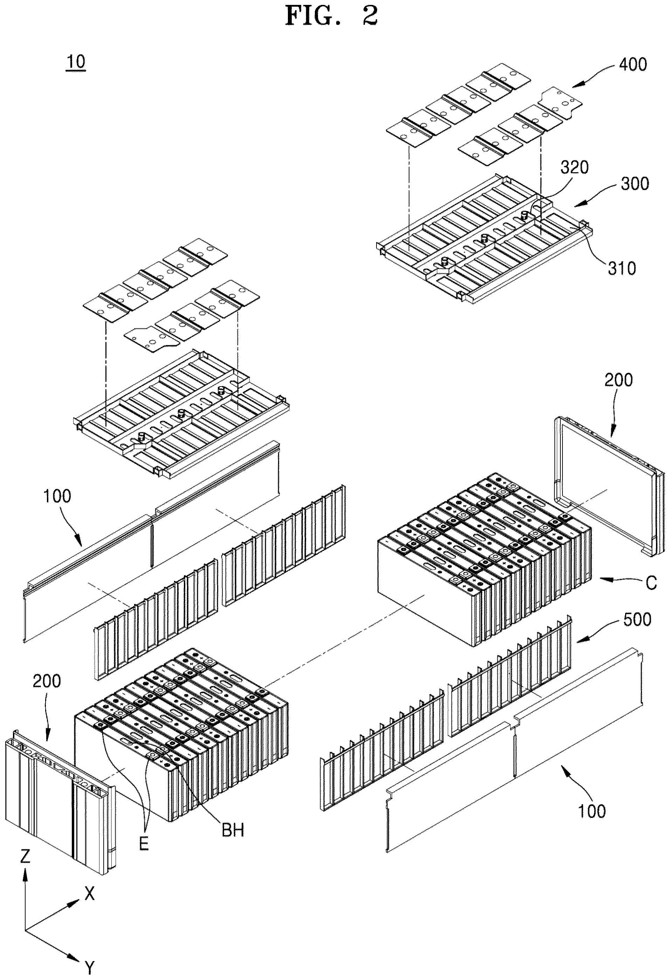

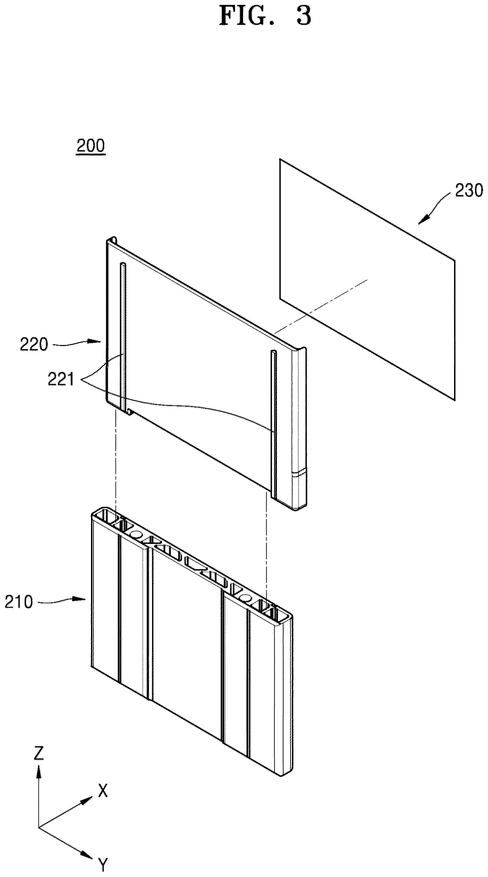

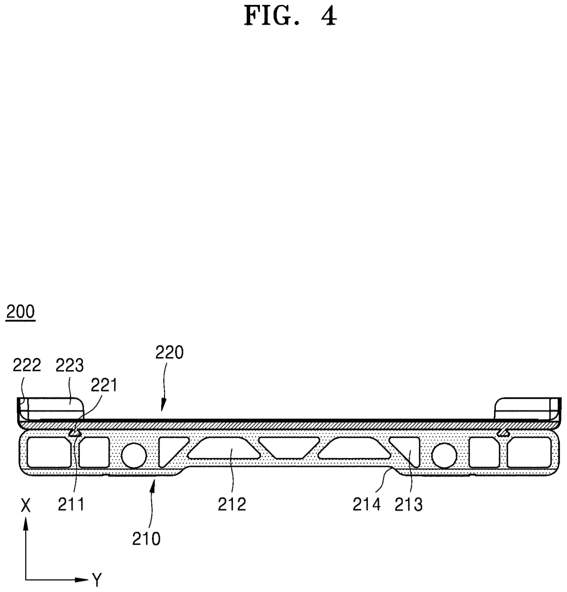

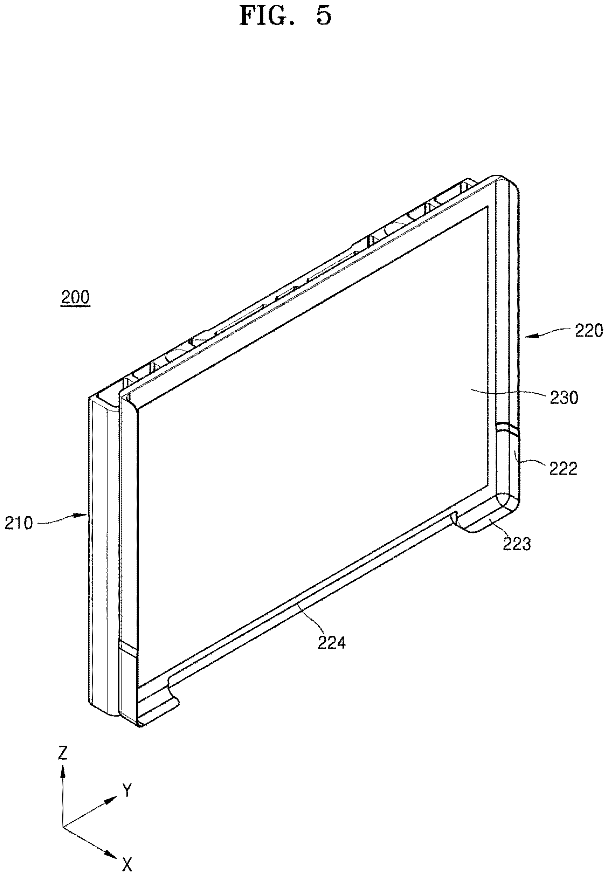

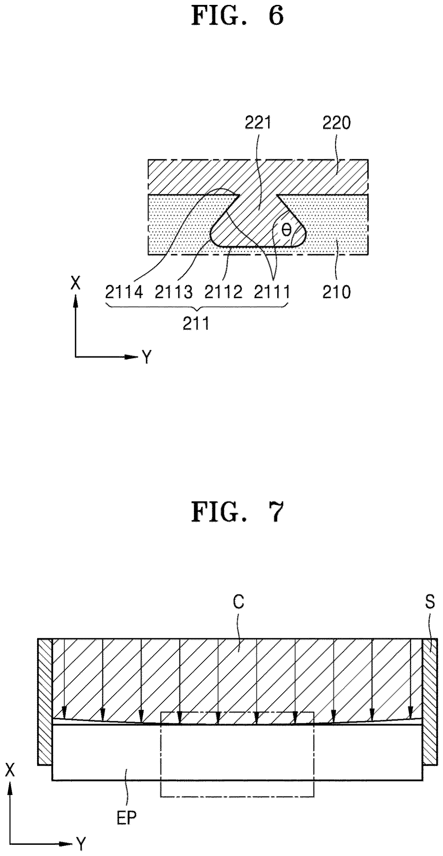

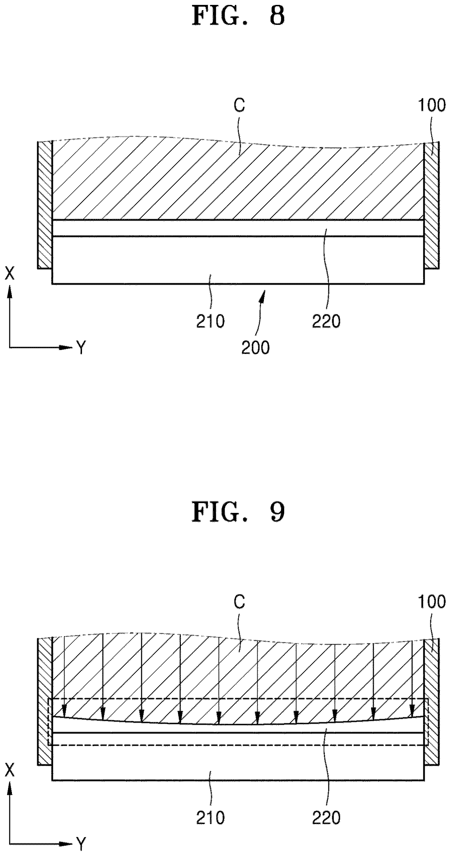

FIG. 1 shows a perspective view of a battery module 10, FIG. 2 shows an exploded perspective view of the battery module 10, FIG. 3 shows an exploded perspective view of an end plate 200, FIG. 4 shows a cross section of the end plate 200, FIG. 5 shows a perspective view of the end plate 200, FIG. 6 shows an enlarged portion of the end plate 200, FIG. 7 shows a pressure distribution on the end plate EP of a conventional battery module, FIG. 8 shows the state before a battery cell C expands in the battery module 10, and FIG. 9 shows a pressure distribution on the end plate EP of the battery module 10 according to one embodiment of the present disclosure.

The battery module 10 refers to a battery assembly in which a plurality of battery cells C are grouped into one group to protect the battery cells C from external shock, heat, vibration, etc. The battery module 10 may include a plurality of battery cells C having a prismatic shape, a pouch shape, or a cylindrical shape. Hereinafter, the description refers to an embodiment in which the battery module 10 includes a plurality of prismatic battery cells C. The battery module 10 may be utilized in large applications such as energy storage system (ESS) or small applications such as power tools. In one or more embodiments, the battery module 10 may be utilized in an electric vehicle. The battery module 10 may be used alone or may be electrically connected to other battery modules 10 to form a battery pack. The battery module 10 may vary depending on the number of battery cells C, the field to which the battery module 10 is applied, and/or the specifications and capacity of the battery module 10. In one or more embodiments, the battery module 10 may have a long rectangular parallelepiped shape in one direction (e.g., a longitudinal direction or an X-axis direction of the battery module 10).

The battery module 10 may include at least one battery cell C, a pair of side plates 100, a pair of end plates 200, a holder 300, and a bus bar 400. In one or more embodiments, the battery module 10 may include the plurality of battery cells C, the side plate 100 located on the side of the plurality of battery cells C, and the end plate 200 connected to the side plate 100. The end plate 200 may include a body 210 and an end cover 220, the end cover 220 is on one side of the body 210 facing the plurality of battery cells C, and at least a portion of the end cover 220 includes a flexible material configured to distribute the pressure applied to the end plate 200.

One or more battery cells C may be included in the battery module 10. The number and arrangement of battery cells C may vary depending on the specifications and application target of the battery module 10. In one or more embodiments, a total of 24 battery cells C may be arranged in the horizontal direction (e.g., in the longitudinal direction or X-axis direction of the battery module 10), and the 24 battery cells C may have a 2parallel (P)12series (S) structure in which 12 pairs of battery cells C are connected in series, and each battery pair may have a structure in which two laterally adjacent battery cells C are connected in parallel. The number and arrangement of battery cells C are not limited thereto and may vary. In one or more embodiments, the plurality of battery cells C may be arranged to form one or more rows and may be connected to each other in series and/or parallel.

Each battery cell C may include a vent hole BH and an electrode E. In one or more embodiments, the vent hole BH may be located near the upper center of the battery cell C. The vent hole BH may allow generated gas to be discharged to the outside of the battery cell C if the battery cell C is damaged or operates abnormally and gas is generated inside the battery cell C. The electrode E may be located on the upper surface of the battery cell C, and two electrodes E may be spaced apart from each other on opposite sides of the vent hole BH. Each electrode (E) may be a cathode or an anode. The electrodes E of the plurality of battery cells C may be connected to each other through the bus bar 400.

The side plate 100 may form the outer frame of the battery module 10 and may be located on at least one side of the plurality of battery cells C. In one or more embodiments, one side plate 100 may be located on each side of the plurality of battery cells C (e.g., in the Y-axis direction). The side plates 100, together with the end plates 200, may partition (form or define) a space in which the plurality of battery cells C are accommodated. The side plate 100 may be in contact with the side of the battery cells C or may be spaced apart from the side of the battery cells C. The side plate 100 may have a long plate shape in the longitudinal direction (e.g., the X-axis direction) of the battery module 10, and both ends of the side plate 100 may be connected to both sides of the end plate 200 (for example, both sides of the body 210). The side plates 100 may cover the sides of all battery cells C included in the battery module 10.

One or more end plates 200 may be provided on the battery module 10 to protect the battery cells C from external shocks or foreign substances. The end plate 200 may have a size and shape corresponding to size and shape of one of the battery cells C. In one or more embodiments, the end plate 200 may have a long and thin rectangular parallelepiped shape in a width direction (e.g., Y-axis direction) of the battery module 10. The end plate 200 may have a width and/or height that is equal to or greater than the width and/or height of one of the battery cells C. In one or more embodiments, one end plate 200 may be located at each end of the battery module 10 in the longitudinal direction (e.g., X-axis direction). Each end plate 200 may be connected to the side plates 100. Each end plate 200 may be connected to the holder 300. The two end plates 200, while connected to the side plates 100, provide compressive force toward the center of the battery module 10, allowing the plurality of battery cells C to come into close contact and keep the plurality of battery cells C from deviating from their designated positions. The end plates 200 may be connected to the side plates 100 and/or the holder 300 through laser welding, ultrasonic welding, screw connection, etc. In one or more embodiments, ends of each side plate 100 may be connected to each of the end plates 200 in the width direction (e.g., Y-axis direction). The holder 300 may be connected to the upper portion of the end plates 200.

The end plate 200 may include the body 210, the end cover 220, and an insulator 230.

The body 210 is located on one side of the end plate 200 and may support other components of the end plate 200. In one or more embodiments, the body 210 may be located at the outermost part of the end plate 200 in the longitudinal direction (e.g., X-axis direction) of the battery module 10. The body 210 may have a width and/or height equal to or greater than that of one of the battery cells C. The body 210 may have a rectangular parallelepiped shape that is long in the width direction (e.g., Y-axis direction) of the battery module 10. An end cover 220 may be located on the inner side of the body 210 facing one of the battery cells C. The body 210 may prevent (or at least mitigate against) external shock from being directly transmitted to the end cover 220 and the battery cells C and may include a material with high rigidity. In one or more embodiments, at least a portion of the body 210 may include metal and/or plastic. The body 210 may have a hollow structure in which at least a portion of the interior is empty.

The body 210 may include a pair of connection grooves 211, a first pore 212, and a second pore 213. In one or more embodiments, the body 210 may include the connection grooves 211 on one side of the body 210 facing the end cover 220. The body 210 may include a plurality of first pores 212 and a plurality of second pores 213

The connection grooves 211 may be on one side of the body 210 and may be connected to connection protrusions 221 of the end cover 220. One or more connection grooves 211 may be formed on the inner surface of the body 210 facing the battery cell C and may extend in the height direction (e.g., Z-axis direction) of the body 210. In one or more embodiments, as shown in FIG. 4, two connection grooves 211 are spaced apart in the width direction (e.g., Y-axis direction) of the body 210, and one connection protrusion 221 may be inserted into each connection groove 211. The connection groove 211 may be a groove for connecting the end cover 220 to the body 210. The body 210 and the end cover 220 may be formed by insert molding. In one or more embodiments, after inserting the connection groove 211 into the mold, if the material to form the end cover 220 is put into the mold, the material may flow into the connection groove 211, and if molding is completed, the connection protrusion 221 of the end cover 220 may be inserted into the connection groove 211 and the end cover 220 may be fixed to the body 210. The connection groove 211 may extend in the height direction (e.g., Z-axis direction) of the battery module 10 and may include a plurality of connection grooves 211 spaced apart in one direction (e.g., Y-axis direction of FIG. 3).

The connection groove 211 may have a shape that prevents (or at least mitigates against) the body 210 and the end cover 220 from being easily separated from each other. The connection groove 211 may have a shape whose cross-sectional area gradually widens from the inner side of the body 210 in contact with the end cover 220 toward the outer side (e.g., a dovetail shape). The cross-sectional area of the connection groove 211 may gradually increase from one side to the other side. In one or more embodiments, as shown in FIG. 6, the connection groove 211 may include inclined surfaces 2111, a bottom surface 2112 connected to the inclined surfaces 2111, and a corner portion 2113 between each of the inclined surfaces 2111 and the bottom surface 2112. The connection groove 211 may include an opening 2114 on one side of the body 210, for example, on the side of the body 210 bordering the end cover 220. The inclined surface 2111 may include two inclined surfaces that each spread outward toward the outer surface of the body 210 from the boundary between the body 210 and the end cover 220. In one or more embodiments, each of the inclined surfaces 2111 may be inclined outward toward the outer surface of the body 210. The inclined surface 2111 may include two inclined surfaces spaced apart in the width direction of the body 210. An angle θ of the inclined surface 2111 with respect to the bottom surface 2112 may range from about (approximately) 20 degrees to about (approximately) 70 degrees, or range from about (approximately) 10 degrees to about (approximately) 60 degrees, or range from about (approximately) 30 degrees to about (approximately) 80 degrees. The angle θ may range from about (approximately) 30 degrees to about (approximately) 60 degrees. The depth of the connection groove 211 may be approximately half or more of the width of the body 210. In one or more embodiments, the depth of the connection groove 211 may range from about (approximately) 60 % to about (approximately) 90 % of the width of the body 210 or range from about (approximately) 65 % to about (approximately) 95 % of the width of the body 210. The depth of the connection groove 211 may be in the range of about (approximately) 50 % to about (approximately) 80 % of the width of the body 210. The bottom surface 2112 is parallel (or substantially parallel) to the body 210, and opposite ends of the bottom surface 2112 may be connected to the two inclined surfaces 2111. The bottom surface 2112 may be located opposite the opening 2114 and may connect the two inclined surfaces 2111 to each other. The width of the bottom surface 2112 may be in the range of about (approximately) 1.5 to about (approximately) 2.5 times the width of the opening 2114 of the connection groove 211. The corner portions 2113 are portions where the two inclined surfaces 2111 are connected to the bottom surface 2112, and at least a portion of the corner portions 2113 may have a curved shape. The corner portions 2113 may be located between the two inclined surfaces 2111 and the bottom surface 2112, and at least a portion of the corner portions 2113 may be curved. In one or more embodiments, each of the corner portions 2113 may have a convex shape toward the outside of the connection groove 211. Due to this shape of the connection groove, during a process of insert-molding the end plate 200, the material of the end cover 220 may sufficiently flow into the connection groove 211, and the contact area between the end cover 220 and the body 210 may be increased.

The connection groove 211 may be located outside the center of the body 210. The center of the body 210 may mean a range of about (approximately) ± 10%, a range of about (approximately) ± 20%, or a range of about (approximately) ± 30 % relative to the center of the width direction (e.g., Y-axis direction) of the body 210. In one or more embodiments, as shown in FIG. 4, each connection groove 211 may be spaced apart from the center of the body 210 in the width direction (e.g., Y-axis direction) of the body 210. Because the center of the body 210 is an area that receives relatively high pressure if the battery cell C expands, a solid connection between the body 210 and the end cover 220 may be ensured by spacing the connection grooves 211 apart or away from the center of the body 210 to prevent excessive stress from being concentrated in the connection grooves 211. The battery cells C may be the two battery cells C located at the outermost portion in the longitudinal direction (e.g., the X-axis direction) of the battery module 10 and are in contact with the end plates 200. The battery cell C may be moved or deformed due to the deformation or expansion of another battery cell C. The battery cell C may be deformed or expanded during use. The connection grooves 211 may be spaced a certain distance from the end of the body 210. In one or more embodiments, the distance from the end of the body 210 to the connection groove 211 may be in the range of about (approximately) 10 % to about (approximately) 60 % of the distance from the end of the body 210 to the center of the body 210. The connection groove 211 may be spaced apart from a plurality of pores in the width direction (e.g., Y-axis direction) of the body 210. That is, the connection grooves 221 may not be aligned with the first pores 212 or the second pores 213. The connection grooves 211 may not overlap the first pore 212 and/or the second pore 213. In one or more embodiments, the central axis (e.g., the central axis in the Y-axis direction) of the connection groove 211 may not overlap the plurality of pores 212 and/or 213. The center of the connection groove 211 in the width direction (e.g., Y-axis direction) may not overlap with the first pore 212 or the second pore 213. Therefore, by maintaining a sufficient distance between the connection groove 211 and the first pore 212 and/or the second pore 213, the body 210 between the connection groove 211 and the first pore 212 and/or the second pore 213 may be prevented from being damaged while pressure is applied to the end plate 200.

The first pore 212 and the second pore 213 are empty spaces formed inside the body 210. In one or more embodiments, the first pore 212 may have the same or different shape as the second pore 213 and may include a plurality of first pores 212 and a plurality of second pores 213 in the width direction (e.g., Y-axis direction) of the body 210. The first pore 212 and the second pore 213 may provide sufficient rigidity of the body 210, reduce the weight of the body 210, and reduce the amount of material used in the body 210. One or more first pores 212 may be formed in the center of the body 210. In one or more embodiments, the first pores 212 may have a trapezoidal shape and may be arranged in one direction (e.g., the width direction of the body 210 or the Y-axis direction of FIG. 4) with the orientations (e.g., the upper and lower sides) of the first pores 212 alternating. Each cross-sectional area of the first pores 212 may be greater than each cross-sectional area of the second pores 213. One or more second pores 213 may be spaced apart from the center of the body 210. The second pore 213 may have a cross-section of various shapes, such as triangular, circular, or square.

The body 210 may further include a concave portion 214. The concave portion 214 may be on one surface of the body 210 and have a concave shape extending toward the inside of the body 210. In one or more embodiments, the concave portion 214 may be on the side of the body 210 opposite to the side of the body 210 facing the battery cell C. If the center of the end plate 200 receives relatively large pressure as the battery cell C expands, the concave portion 214 may form a free space in which the body may be deformed rearwardly. The concave portion 214 may be formed at a location corresponding to the center (or substantially the center) of the body 210.

The end cover 220 may be on one side of the body 210. In one or more embodiments, the end cover 220 may be supported on the inner surface of the body 210 such that the end cover 220 faces the battery cell C. The end cover 220 may have a shape corresponding to a shape of the battery cell C or the body 210. The end cover 220 has an overall thin flat shape, and wings are formed at both ends in the width direction to form a space inside that may support the battery cell C. The battery cells C may refer to the two battery cells C located at the outermost parts in the longitudinal direction (e.g., X-axis direction) of the battery module 10. The end cover 220 may have a greater width and height than the body 210 and/or the battery cell C. At least a portion of the end cover 220 may include a deformable elastic material. At least a portion of the end cover 220 may include a flexible material. At least the inner side of the end cover 220 facing the battery cell C may be made of a flexible material, and the body 210 may include a material more rigid than the end cover 220. In one or more embodiments, at least a portion of the end cover 220 may be made of ethylene-propylene diene monomer (EPDM), which is a rubber material. Therefore, as the battery cells C expand, the end cover 220 deforms to absorb the pressure received by the end plate 200 and evenly disperses the pressure across the entire end cover 220, thereby preventing the pressure from being concentrated locally on the body 210.

For example, the end cover 220 may be deformed into a shape corresponding to the battery cell C closest to the end plate 200 among the plurality of battery cells C. For example, as one or more of the plurality of battery cells C deform or expand, the end cover 220 may be deformed to have a concave center. For example, as one or more of the plurality of battery cells C deform or expand, the end cover 220 may have a shape in which the thickness gradually decreases from the end toward the center in one direction (for example, a longitudinal direction of the end cover 220 or the Y-axis direction of FIG. 4).

For example, one or more of the plurality of battery cells C may be deformed or expanded, or there may be some variation in thickness of the battery cells C, so that a pressure exceeding the design value may be applied to one or both of the end plates 200. Swelling of the battery cell C may appear larger in the center. If the thickness of the center of the battery cell C is greater than the design value, a relatively large pressure may be concentrated in the center of one or both of the end plates 200. However, in the related art, as shown in FIG. 7, in order to protect the battery cells C from external shock and prevent damage to the appearance of the battery cell C, the end plate EP and/or the end cover on the inner surface of the end plate EP include a material with relatively high hardness. Therefore, the end plate EP may not evenly disperse the pressure applied by the battery cell C, and the center of the end plate EP (dotted line in FIG. 7) is subjected to great pressure. As a result, the end plate EP is prone to being deformed or damaged as a whole, including the center of the end plate EP. Since the end plate EP is pressed in a direction perpendicular to the coupling force between the side plate S and the end plate EP, a shear force is generated at the connection between the end plate EP and the side plate S, and the connection between the end plate EP and the side plate S may be broken.

As shown in FIG. 8, the battery module 10 includes an end plate 200 including a body 210 and an end cover 220, and at least a portion of the end cover 220 may include a deformable elastic material. At least a portion of the end cover 220 may include a flexible material. Therefore, even if the center of the battery cell C expands and a great pressure is concentrated in the center of the end plate 200, the shape of the end cover 220 may be deformed in response to the deformed shape and/or pressure distribution of the battery cell C. In one or more embodiments, as shown in FIG. 9, the center of the end cover 220 may be more compressed and the amount of deformation of the end cover 220 may decrease as it moves toward the end of the end cover 220 in the width direction (e.g., the Y-axis direction). In this regard, the end cover 220 may be deformed to have a concave shape at the center of the end cover 220 depending on the pressure distribution of the battery cell C. Depending on the deformation of the battery cell C and/or the distribution of pressure applied by the battery cell C to the end cover 220, the end cover 220 may have a shape in which the thickness gradually increases from the center of the end cover 220 toward the sides of the end cover 220 in the width direction (e.g. Y-axis direction). The body 210 supporting the end cover 220 may include a material with high rigidity and substantially no deformation. Therefore, while one side of the end cover 220 is supported by the body 210, the other surface facing the battery cell C may be freely deformed depending on the deformation of the battery cell C and/or the pressure distribution on the end cover 220. Therefore, the pressure applied by the battery cell C is evenly (or substantially evenly) dispersed not only to the center of the end cover 220 but also to the outside (dotted line in Figure 9), so the battery module 10 may prevent (or at least mitigate against) damage to the end plate 200 and firmly maintain the connection between the end plate EP and side plate S.

The end cover 220 may include the connection protrusion 221, a first guide 222, a second guide 223, and a slit 224. The end cover 220 may include a pair of first guides 222 and a pair of second guides 223 at opposite sides in the width direction (e.g., Y-axis direction). In one or more embodiments, the end cover 220 may include a connection protrusion 221 inserted into the connection groove 211 on one surface facing the body 210. The connection protrusion 221, the first guide 222, and the second guide 223 may all include the same material as the end cover 220. In one or more embodiments, the connection protrusion 221, the first guide 222, and/or the second guide 223 may include a deformable elastic material and/or a flexible material. The material may be rubber, such as ethylene propylene diene monomer (EPDM). The connection protrusion 221, the first guide 222, and the second guide 223 may be formed as one piece (i.e., integral or monolithic) through injection molding. The connection protrusion 221, the first guide 222, and the second guide 223 may form one piece. The connection protrusion 221, the first guide 222, and the second guide 223 may be one or more separate members, and may be detachably coupled to each other through welding, adhesive, screw connection, etc. In one or more embodiments, the end cover 220 may include a first guide 222 that protrudes toward the battery cell C at an edge of the end cover 220 and a second guide 223 that extends from the lower end of the first guide 222, and the connection protrusion 221, the first guide 222, and the second guide 223 may form one member including the same material.

The connection protrusion 221 may be on the end cover 220 and coupled to the connection groove 211 of the body 210. In one or more embodiments, a plurality of connection protrusions 221 may be on one surface of the end cover 220 facing the body 210. As shown in FIG. 3, the two connection protrusions 221 may be spaced apart in the width direction (e.g., Y-axis direction) of the end cover 220. The connection protrusion 221 may extend in the height direction (e.g., Z-axis direction) of the end cover 220. The connection protrusion 221 may be formed over the entire height (or substantially the entire height) of the end cover 220 or may be formed on only a portion of the end cover 220. The connection protrusion 221 may be a coupling portion with the body 210 that is formed while insert-molding the end cover 220. The shape of the connection protrusion 221 may correspond to the shape of the connection groove 211 and may be the same (or substantially the same) as the shape of the connection groove 211 described with reference to FIG. 6. In one or more embodiments, the connection protrusion 221 may include a plurality of connection protrusions 221 corresponding to a plurality of connection grooves 211.

The first guides 222 may be on the end cover 220 to form a space in which one of the battery cells C is accommodated and may support the battery cell C. For example, the first guides 222 are located at both sides of the end cover 220 in the width direction (e.g., Y-axis direction) and may form a space therebetween to accommodate one of the battery cells C. The first guide 222 may be formed of a pair of first guides 222 located on both sides of the end cover 220 in one direction (e.g., Y-axis direction of FIG. 4). The first guide 222 may protrude from the inner surface of the end cover 220 toward the battery cell C and form a wing together with the second guide 223. The first guide 222 is configured to absorb and disperse the pressure applied to both sides of the end cover 220 as the battery cell C is deformed, and may partially suppress excessive deformation or expansion of the battery cell C.

The second guides 223 are located on the end cover 220 to form a space in which one of the battery cells C is accommodated and may support the battery cell C. In one or more embodiments, the second guide 223 may be located at each corner on both sides of the lower portion of the end cover 220 and may extend from the lower end of a respective one of the first guides 222 toward the center of the end cover 220. The second guide 223 may include a pair of second guides 223 extending from the lower end of the pair of first guides 222 along the lower edge of the end cover 220. The second guide 223 may support one of the battery cells C together with the first guide 222. The second guide 223 may be configured to absorb and disperse the pressure applied downward to the end cover 220 as the battery cell C is deformed, and may partially suppress excessive deformation or expansion of the battery cell C.

The slit 224 may be located at the lower portion of the end cover 220. In one or more embodiments, as shown in FIG. 5, the slit 224 may be between the two second guides 223. The slit 224 is an empty space between the two second guides 223, and the second guide 223 may cover only a portion of the lower portion of the battery cell C. Therefore, heat generated in the battery cell C may be smoothly discharged to the lower portion through the slit 224. The length of the slit 224 may be greater than the length of the second guide 223 in the width direction (e.g., the Y-axis direction). In one or more embodiments, the length of the slit 224 may be greater than the sum of the lengths of the plurality of second guides 223.

The insulator 230 may be between the end plate 200 and one of the battery cells C. In one or more embodiments, the insulator 230 may include insulating resin and may be on one side of the end cover 220 facing one of the battery cells C. The insulator 230 may insulate the battery cell C from the end plate 200, and form a space between the battery cell C and the end plate 200 to allow air to flow and cool the battery cell C. At least a portion of the insulator 230 may include a flame retardant and/or insulating material. The insulator 230 may have a smaller size (e.g., a smaller width and/or height) than the end cover 220 and may have a shape and size corresponding to the face of the battery cell C facing the insulator 230.

The holder 300 may be on the battery module 10 to support the battery cells C and the bus bar 400. The holder 300 may be located on one side of (e.g., above) the plurality of battery cells C and may include openings 310 to expose the electrodes E in each battery cell C. A plurality of openings 310 may be formed at positions corresponding to the positions of the electrodes E. In one or more embodiments, the holder 300 may include a plurality of openings 310 arranged in two rows on one side and the other side based on the center of the battery cell C. A window 320 corresponding to the vent holes BH of the battery cells C may be in the center of the holder 300. The edges of the holder 300 may be connected to the side plates 100 and the end plates 200. In one or more embodiments, the holder 300 may have a rectangular shape including two long sides and two short sides, and the edges corresponding to the two long sides may be respectively connected to the two side plates 100. The edges corresponding to the two short sides may be connected to the two end plates 200. In one or more embodiments, the long side of the holder 300 may be parallel (or substantially parallel) to the longitudinal direction (e.g., X-axis direction) of the battery module 10. The holder 300 may be connected to the side plates 100 and the end plates 200 through welding or screws. With the holder 300 on the plurality of battery cells C, a plurality of bus bars 400 may be supported on the holder 300. The holder 300 may include one or more holders 300.

The bus bar 400 may include a conductive member, such as metal, and may be supported on the holder 300. The bus bar 400 may be connected to the electrode E of the battery cell C through the opening 310 of the holder 300 to electrically connect a plurality of battery cells C. With the holder 300 on the plurality of battery cells C, the plurality of bus bars 400 may be supported on the holder 300. The bus bars 400 may correspond to the openings 310 of the holder 300 and may be electrically connected to the electrodes E exposed through the openings 310. The bus bars 400 may connect a plurality of battery cells C in series and/or in parallel. In one or more embodiments, the bus bar 400 may connect two adjacent battery cells C in parallel in the longitudinal direction (e.g., X-axis direction) of the battery module 10 and connect the parallel connected battery cells C in series. The bus bar 400 may include an external terminal electrically connected to other battery modules 10 in an embodiment in which the battery module 10 is combined with other battery modules 10 to form a battery pack. The external terminal may be a terminal connected to a battery management system (BMS) of the battery pack.

The battery module 10 may further include a pair of spacers 500. The spacers 500 may be on the sides of the plurality of battery cells C to secure a gap between the battery cells C and prevent the battery cells C from contacting each other. In one or more embodiments, the spacers 500 may be between the plurality of battery cells C and the side plates 100 and may include a protrusion protruding toward the plurality of battery cells C. The protrusions may be inserted between battery cells C to form a gap between adjacent battery cells C in the longitudinal direction (e.g., X-axis direction) of the battery module 10. The battery cells C are insulated from each other through the gap formed by the spacer 500, and air is configured to move through the space between the battery cells C, allowing cooling of the battery cells C. The gap formed by the spacer 500 may serve as a movement path for a fire extinguishing agent. At least a portion of the spacer 500 may include a flame retardant and/or heat insulating material. In one or more embodiments, the spacer 500 may be formed by arranging a plurality of bars in a direction that intersects each other. The spacer 500 may form a gap between the battery cells C and the side plates 100 as well as a gap between the adjacent battery cells C. The spacer 500 may prevent the battery cells C from coming into direct contact with the side plates 100 and may form sufficient space between the battery cell C and the side plates 100 to allow air to move smoothly therebetween. In one or more embodiments, at least a portion of the spacers 500 may include ceramic paper or mica.

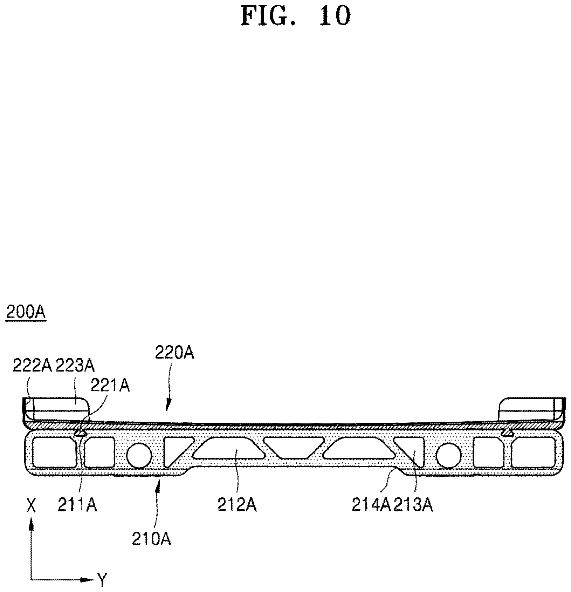

FIG. 10 shows a cross section of an end plate 200A according to another embodiment of the present disclosure. The end plate 200A may include a body 210A and an end cover 220A. The end plate 200A may further include an insulator on the inner surface (e.g., the surface facing one of the battery cells C) of the end cover 220A. The body 210A and a connection groove 211A, a first pore 212A, a second pore 213A, and a concave portion 214A, which are sub-components of the body 210A, are the same as the body 210, the connection groove 211, the first pore 212, the second pore 213, and concave portion 214, which are described above, respectively, and detailed descriptions thereof are omitted. The end cover 220A includes a connection protrusion 221A, a first guide 222A, a second guide 223A, and a slit. The connection protrusion 221A, the first guide 222A, the second guide 223A, and the slit are the same as the connection protrusion 221, first guide 222, second guide 223, and slit 224 which are described above, respectively, and the detailed descriptions thereof are omitted.

At least a portion of the end cover 220A may have a curved shape. In one or more embodiments, the end cover 220A may have at least a portion of the surface facing the battery cell C curved. The end cover 220A may have a shape that corresponds to pressure distribution depending on expansion or deformation of the battery cell C or thickness deviation (greater than the design value) of the battery cell C, and may have a concave inner surface. Before the battery cell C expands or deforms, the distance between the inner side of the end cover 220A and the facing side of the battery cell C is longest at the center in the width direction (e.g. Y-axis direction) of the end cover 220A, and gradually becomes shorter toward both ends of the end cover 220A. Therefore, there may be some time before the battery cell C begins to expand or deform and exert pressure on the center of the end plate 200A. By reducing the pressure applied to the center of the end plate 200A, deformation and damage to the end plate 200A may be reduced, and a solid connection between the side plate 100 and end plate 200A may be maintained.

The battery module disperses the pressure applied to the end plate in response to the deformation or expansion of the battery cell, thereby reducing damage and deformation of the end plate and battery cell and reducing the shear force applied to the connection between the end plate and side plate.

The battery module may evenly (or substantially evenly) disperse the pressure applied to the center of the end plate by including an end cover made of a flexible material.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery module comprising:
a plurality of battery cells;
a side plate on a side of the plurality of battery cells; and
an end plate connected to the side plate,
wherein the end plate comprises:
a body; and
an end cover on one side of the body facing the plurality of battery cells, wherein at least a portion of the end cover comprises a flexible material, and wherein the end cover is configured to distribute pressure applied to the end plate.

2. The battery module as claimed in claim 1, wherein:
(i) the end cover has a shape that is capable of being deformed to correspond to a battery cell closest to the end plate among the plurality of battery cells; and/or
(ii) a center of the end cover is configured to deform concavely in response to one or more of the plurality of battery cells deforming or expanding.

3. The battery module as claimed in claim 1 or 2, wherein a thickness of the end cover gradually decreases along a direction from an end of the end cover toward a center of the end cover.

4. The battery module as claimed in claim 1, 2 or 3,
wherein the body comprises a connection groove in one surface of the body facing the end cover, and
wherein the end cover comprises a connection protrusion in the connection groove, the connection protrusion being on one side of the end cover facing the body.

5. The battery module as claimed in claim 4, wherein a cross-sectional area of the connection groove gradually increases from one side to another side of the body.

6. The battery module as claimed in claim 4 or 5, wherein the connection groove comprises an inclined surface inclined outward in a direction away from the one surface.

7. The battery module as claimed in claim 6,
wherein the inclined surface comprises two inclined surfaces spaced apart in a width direction of the body, and
wherein the connection groove comprises:
an opening in the one surface; and
a bottom surface opposite the opening and connecting the two inclined surfaces to each other.

8. The battery module as claimed in claim 7, wherein the connection groove further includes a corner portion that is between the two inclined surfaces and the bottom surface and wherein at least a portion of the corner portion is curved.

9. The battery module as claimed in any one of claims 4 to 8,
wherein the body comprises a plurality of pores, and
wherein the connection groove is spaced apart from the plurality of pores in a width direction of the body.

10. The battery module as claimed in claim 9, wherein a central axis of the connection groove does not overlap the plurality of pores.

11. The battery module as claimed in any one of claims 4 to 10,
wherein the connection groove extends in a height direction of the battery module and comprises a plurality of connection grooves spaced apart in one direction, and
wherein the connecting protrusion comprises a plurality of connecting protrusions corresponding to the plurality of connection grooves.

12. The battery module as claimed in any preceding claim, wherein:
(i) an inner surface of the end cover facing one of the plurality of battery cells comprises a flexible material, and
wherein the body comprises a material more rigid than the end cover; and/or
(ii) the body and the end cover are formed by insert molding.

13. The battery module as claimed in claim 4 or any claim dependent on claim 4, wherein the end cover comprises:
a first guide at an edge of the end cover and protruding toward the plurality of battery cells; and
a second guide extending from a lower portion of the first guide,
wherein the connecting protrusion, the first guide, and the second guide are integral and comprise a same material.

14. The battery module as claimed in claim 13,
wherein the first guide comprises a pair of first guides on both sides of the end cover in one direction, and
wherein the second guide comprises a pair of second guides extending from lower ends of the pair of first guides and along a lower edge of the end cover.

15. The battery module as claimed in claim 14, wherein the end cover further comprises a slit between the pair of second guides.
